# EUROPÄISCHE PATENTSCHRIFT

(11) **EP 1 530 528 B1**
(45) Veröffentlichungstag und Bekanntmachung des Hinweises auf die Patenterteilung: **17.05.2006**
(21) Anmeldenummer: 03793651.5
(22) Anmeldetag: 28.07.2003
(51) Int. Cl.: B60T 8/00, B60T 13/74, B60T 7/10

(54) **VERFAHREN ZUR BETÄTIGUNG EINER ELEKTROMECHANISCHEN FESTSTELLBREMSVORRICHTUNG**
METHOD FOR ACTUATING AN ELECTROMECHANICAL PARKING BRAKE DEVICE
PROCEDE D'ACTIONNEMENT D'UN DISPOSITIF DE FREIN DE STATIONNEMENT ELECTROMECANIQUE

(30) Priorität: 13.08.2002 DE 10236968
(43) Veröffentlichungstag der Anmeldung: 18.05.2005
(73) Patentinhaber: Continental Teves AG & Co. oHG, 60488 Frankfurt am Main (DE); Maron, Christof, 65779 Kelkheim (DE)
(72) Erfinder: ROLL, Georg, 63150 Heusenstamm (DE); MARON, Christof, 65779 Kelkheim (DE)
(86) Internationale Anmeldenummer: PCT/EP2003/008303
(87) Internationale Veröffentlichungsnummer: WO 2004/022394

(56) Entgegenhaltungen:
- EP-A- 0 275 783
- WO-A-02/46016
- WO-A-99/45292
- DE-A- 10 033 344

## Beschreibung

Die vorliegende Erfindung betrifft ein Verfahren zur Betätigung einer elektromechanischen Feststellbremsvorrichtung bei einer mittels eines elektromechanischen Aktuators betätigbaren Bremse, bei der der Aktuator aus einem Elektromotor sowie einem dem Elektromotor nachgeschalteten Untersetzungsgetriebe zur Umwandlung einer Drehbewegung in eine translatorische Bewegung besteht, und bei der die elektromechanische Feststellbremsvorrichtung als ein Verriegelungsmechanismus ausgebildet ist, der die Drehbewegung des Aktuators in Löserichtung verhindern kann und der erst wieder durch weiteres Zuspannen gelöst werden kann.

Eine derartige elektromechanisch betätigbare Bremse ist aus der internationalen Patentanmeldung WO 99/45292 bekannt. Die elektromechanische Feststellbremsvorrichtung der vorbekannten Bremse besteht aus einer mittels eines Elektromagneten betätigbaren Sperrklinke, die mit einem Zahnkranz in Eingriff bringbar ist, der am Rotors des Elektromotors befestigt ist. Der genannten Veröffentlichung sind jedoch keine Hinweise auf die Ansteuerung der Feststellbremsvorrichtung zu entnehmen. Die vorbekannte Bremse weist keinen Sensor zur Ermittlung der Spannkraft auf, so dass diese aus anderen Daten abgeschätzt werden muss.

Es ist daher Aufgabe der vorliegenden Erfindung, ein Verfahren zur Betätigung einer elektromechanischen Feststellbremsvorrichtung vorzuschlagen, das ohne die Verwendung eines Spannkraftsensors eine in sämtlichen Betriebszuständen zuverlässige Feststellbremsfunktion gewährleistet.

Diese Aufgabe wird erfindungsgemäß dadurch gelöst, dass während der Aktivierung der Feststellbremsvorrichtung ein Mittelwert des Drehmoments des Elektromotors, das zum Aufbringen der dem Feststellbremsvorgang entsprechenden Zuspannkraft der Bremse erforderlich ist, bei gleichzeitiger Erfassung der Aktuatorposition ermittelt und gespeichert wird und der Elektromotor zu späteren Zeitpunkten derart angesteuert wird, dass er dieses, mit einem Korrekturfaktor k_{η} => 1 multiplizierte Drehmoment aufbringt, so dass die aufgebrachte Spannkraft aufrecht erhalten bzw. erhöht wird.

Weitere vorteilhafte Merkmale des erfindungsgemäßen Verfahrens sind den Unteransprüchen 2 bis 12 entnehmbar.

Das erfindungsgemäße Verfahren wird in der nachfolgenden Beschreibung eines Ausführungsbeispiels unter Bezugnahme auf die beiliegende Zeichnung näher erläutert. In der Zeichnung zeigen:
- Fig. 1: eine Ausführung einer mit einer elektromechanischen Feststellbremsvorrichtung ausgestatteten, elektromechanisch betätigbaren Bremse im Axialschnitt, bei der das erfindungsgemäße Verfahren anwendbar ist,
- Fig. 2: die Ausführung der bei der Bremse gemäß Fig. 1 verwendeten Feststellbremsvorrichtung,
- Fig. 3: die Feststellbremsvorrichtung gemäß Fig. 2 in Ruhestellung in gebrochener Darstellung,
- Fig. 4: die Feststellbremsvorrichtung gemäß Fig. 2 in betätigter Stellung in gebrochener Darstellung und
- Fig. 5: eine diagrammatische Darstellung des Ablaufs des erfindungsgemäßen Verfahrens.

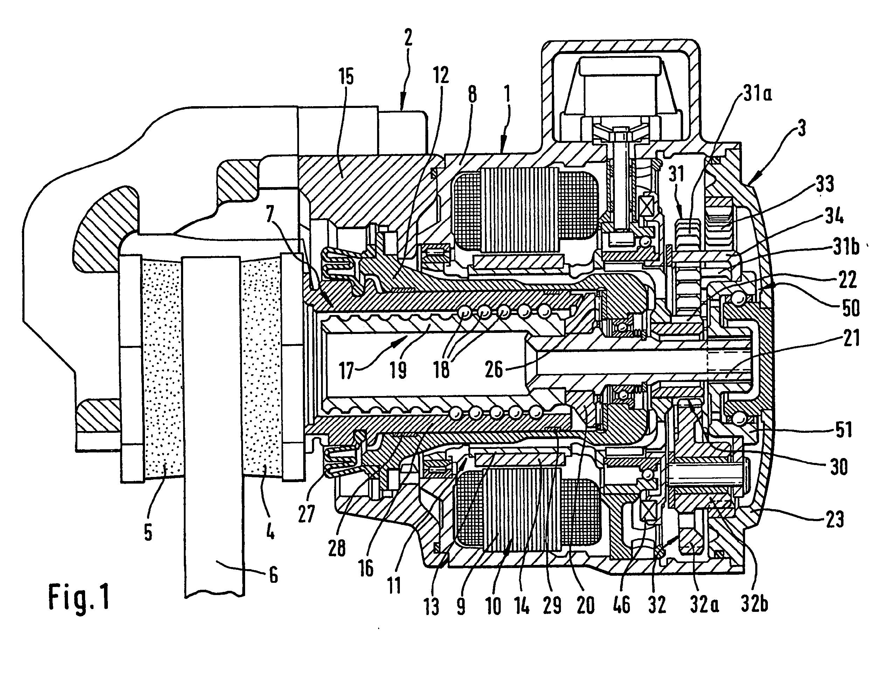

Die insbesondere in Fig. 1 der Zeichnung dargestellte, elektromechanisch betätigbare Bremse, bei der das erfindungsgemäße Verfahren anwendbar ist und die als eine Schwimmsattel-Scheibenbremse ausgeführt ist, besteht im wesentlichen aus einem elektromechanischen Aktuator sowie einem lediglich schematisch angedeuteten Bremssattel, der in einem nicht gezeigten feststehenden Halter verschiebbar gelagert ist. Ein Paar von Reibbelägen 4 und 5 ist im Bremssattel derart angeordnet, dass sie der linken und der rechten Seitenfläche einer Bremsscheibe 6 zugewandt sind.

Nachstehend wird der in der Zeichnung rechts gezeigte Reibbelag 4 als erster Reibbelag und der andere, mit 5 bezeichnete Reibbelag als zweiter Reibbelag bezeichnet. Während der erste Reibbelag 4 mittels eines Betätigungselements 7 durch den Aktuator direkt mit der Bremsscheibe 6 in Eingriff bringbar ist, wird der zweite Reibbelag 5 durch die Wirkung einer bei der Betätigung der Anordnung vom Bremssattel aufgebrachten Reaktionskraft gegen die gegenüberliegende Seitenfläche der Bremsscheibe 6 gedrückt. Der Aktuator, der mittels nicht gezeigter Befestigungsmittel am Bremssattel angebracht ist, weist einen modularen Aufbau auf und besteht im wesentlichen aus drei selbständig handhabbaren Baugruppen bzw. Modulen, und zwar aus einer Antriebseinheit 1, einem den ersten Reibbelag 4 betätigenden ersten Untersetzungsgetriebe 2 und einem zwischen der Antriebseinheit 1 und dem ersten Untersetzungsgetriebe 2 wirkungsmäßig geschalteten zweiten Untersetzungsgetriebe 3.

Die vorhin erwähnte Antriebseinheit 1 besteht aus einem Elektromotor 10, der im dargestellten Beispiel als ein permanentmagneterregter, elektronisch kommutierter Motor ausgebildet ist, dessen Stator 9 unbeweglich in einem Motorgehäuse 8 angeordnet ist und dessen Rotor 11 durch einen ringförmigen Träger 13 gebildet ist, der mehrere Permanentmagnetsegmente 14 trägt. Zwischen dem Elektromotor 10 und dem vorhin erwähnten Betätigungselement 7 ist wirkungsmäßig das erste Untersetzungsgetriebe 2 angeordnet, das im gezeigten Beispiel als ein Kugelgewindetrieb 16 bis 21 ausgebildet ist, das in einem Getriebegehäuse 15 gelagert ist, das auch einteilig mit dem vorhin erwähnten Bremssattel ausgeführt sein kann. Der Kugelgewindetrieb besteht dabei aus einer Gewindemutter 16 sowie einer Gewindespindel 17, wobei zwischen der Gewindemutter 16 und der Gewindespindel 17 mehrere Kugeln 18 angeordnet sind, die bei einer Rotationsbewegung der Gewindespindel 17 umlaufen und die Gewindemutter 16 in eine axiale bzw. translatorische Bewegung versetzen. Die Gewindemutter 16 bildet dabei vorzugsweise das vorhin erwähnte Betätigungselement 7. Die vom Elektromotor 10 über das zweite Untersetzungsgetriebe 3 angetriebene Gewindespindel 17 ist dabei vorzugsweise dreiteilig ausgebildet und besteht aus einem mit der Gewindemutter 16 mittels der vorhin erwähnten Kugeln 18 im Eingriff stehenden, rohrförmigen ersten Spindelteil 19, einem ringförmigen zweiten Spindelteil 20 sowie einem dritten Spindelteil 21.

Die Anordnung ist dabei vorzugsweise derart getroffen, dass der Rotor 11 des Motors 10 unter Zwischenschaltung des zweiten Untersetzungsgetriebes 3 das dritte Spindelteil 21 antreibt, während die Gewindemutter 16 sich am ersten Reibbelag 4 abstützt.

Eine Reduzierung des erforderlichen Motormoments wird bei der in der Zeichnung dargestellten Ausführung der Erfindung durch zweckmäßige Integration eines Planetengetriebes 30 - 34 erreicht, das das vorhin erwähnte zweite Untersetzungsgetriebe 3 bildet. Das Planetengetriebe, das wirkungsmäßig zwischen dem Rotor 11 und der Gewindespindel 17 angeordnet ist, besteht aus einem Sonnenrad 30, das vorzugsweise durch einen am Rotor 11 ausgebildeten, außen verzahnten Bereich 22 gebildet ist, mehreren gestuften Planetenrädern, von denen zwei dargestellt und mit den Bezugszeichen 31 und 32 versehen sind, sowie einem Hohlrad 33. Die gestuften Planetenräder 31, 32, die in einem Planetenkäfig 34 gelagert sind, weisen eine mit dem Sonnenrad 30 zusammenwirkende erste Stufe sowie eine mit dem Hohlrad 33 zusammenwirkende zweite Stufe auf, wobei die erste Stufe durch Zahnräder 31a, 32a größeren Durchmessers und die zweite Stufe durch Zahnräder 31b, 32b kleineren Durchmessers gebildet sind. Der vorhin erwähnte Planetenkäfig 34 ist dabei vorzugsweise derart ausgeführt, dass sein zwischen den Lagerstellen der Planetenräder 31, 32 und der Ankopplungsstelle der Gewindespindel 17 liegender Bereich sowohl ein geringes axiales als auch radiales Spiel sowie einen geringen Winkelversatz zulässt und beispielsweise als eine Lamellenscheibe oder ein Faltenbalg ausgebildet ist. Das Hohlrad 33 wird durch einen innenverzahnten Bereich eines das Gehäuse des Planetengetriebes bildenden Deckels 23 gebildet.

Die vorhin erwähnte Gewindemutter 16 des Kugelgewindetriebs ist in einem topfförmigen Führungsteil 12 geführt bzw. gelagert. Die Lagerung der Gewindemutter 16 im Führungsteil 12 erfolgt sowohl in ihrem dem ersten Reibbelag 4 zugewandten Bereich mittels eines im Führungsteil 12 angeordneten ersten Gleitringes 28 als auch in ihrem dem Reibbelag 4 abgewandten Endbereich mittels eines auf der Gewindemutter 16 angeordneten zweiten Gleitringes 29.

Weiterhin ist Fig. 1 zu entnehmen, daß das zweite ringförmige Spindelteil 20 sich an einem innerhalb des Führungsteils 12 angeordneten Axiallager 26 abstützt, während das dritte Spindelteil 21 mittels einer formschlüssigen Steckverbindung mit dem Planetenkäfig 34 des zweiten Untersetzungsgetriebes 3 verbunden ist. Zu diesem Zweck ist das Ende des dritten Spindelteiles 21 beispielsweise als Bestandteil einer Torx-Verbindung oder als ein Sechskant ausgebildet, der in eine entsprechend geformte Öffnung im Planetenkäfig 34 hineingeschoben wird. Dabei ist es besonders vorteilhaft, wenn die formschlüssige Steckverbindung torsionssteif, radial nachgiebig und biegeweich an den Planetenkäfig 34 angekoppelt ist. Die Ankopplung erfolgt mittels eines Außenringes 51 eines im Deckel 23 vorgesehenen Radiallagers 50. Eine zwischen der Gewindemutter 16 und dem Führungsteil 12 eingespannte elastische Dichtung bzw. Dichtmanschette 27 verhindert ein Eindringen von Verunreinigungen ins Innere des Kugelgewindetriebs.

Außerdem ist es für eine einwandfreie Funktion der erfindungsgemäßen Betätigungseinheit sinnvoll, wenn die Gewindemutter 16 an ihrem dem Reibbelag 4 abgewandten Ende mit einem nicht gezeigten axialen Vorsprung versehen ist, der bei ihrem Zurückstellen mit einem am Umfang des zweiten Spindelteiles 20 ausgebildeten Anschlag zusammenwirkt. Durch Abstützen einer Seitenfläche des Vorsprungs am Anschlag wird ein weiteres Zurückstellen der Gewindemutter 16 wirksam verhindert, so dass kein Verklemmen der beiden Teile 16, 20 eintreten kann.

Um die aktuelle Position des Rotors 11 zu ermitteln ist ein nicht näher dargestelltes Lageerkennungssystem 46 vorgesehen. Die Lageinformation wird dann mittels eines Hallsensors oder eines magnetoresistiven Elements ermittelt.

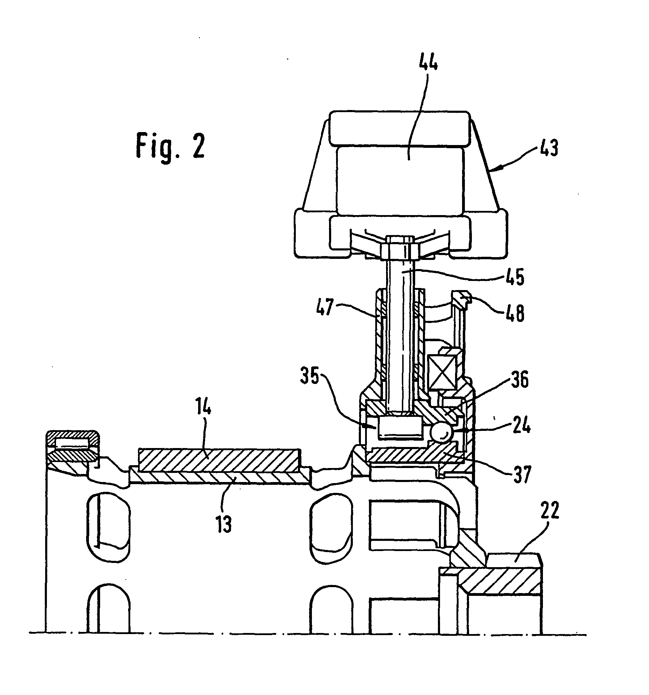

Um schließlich die Funktion einer Feststellbremse realisieren zu können weist die erfindungsgemäße Betätigungseinheit elektromechanische Mittel (s. Fig. 2) auf, die, mit dem Rotor 11 des Elektromotors 10 zusammenwirkend, sein Verriegeln ermöglichen. Im gezeigten Ausführungsbeispiel werden die elektromechanischen Mittel durch einen elektromagnetisch betätigbaren Freilauf gebildet, der das Bezugszeichen 35 trägt und mit einem Radiallager 24 zusammenwirkt, in dem der Rotor 11 gelagert ist. Die dem Freilauf 35 zugeordnete elektrische Aktuatorik ist in der Art eines mechanischen Flip-Flops aufgebaut, dessen Zustand bei jeder kurzen Bestromung geändert wird.

Wie insbesondere Fig. 2 bis 4 zu entnehmen ist, sind wesentliche Teile des Freilaufs 35 im oben erwähnten Radiallager 24 integriert. Zu diesem Zweck sind sowohl der Außenring 36 als auch der Innenring 37 des Radiallagers 24 einseitig derart verlängert, dass sie einen Ringraum begrenzen, der einen Klemmkörper 38 aufnimmt, wobei durch die besondere Gestaltung des verlängerten Bereichs der Lagerringe 36, 37 eine formschlüssige Verbindung zwischen den Lagerringen 36, 37 und dem Klemmkörper 38 gewährleistet ist. Der Außenring 36 weist dabei vorzugsweise in seinem mit dem Klemmkörper 38 zusammenwirkenden Bereich eine radiale Ausnehmung 39 auf, die einseitig durch eine Schräge bzw. Rampe 40 begrenzt wird, während der Innenring 37 mit einer Profilierung 41 versehen ist, die der Kontur des Klemmkörpers 38 entspricht und mit der Ausnehmung 39 einen Klemmspalt begrenzt. Der Klemmkörper 38, der als eine Klemmrolle oder kugelförmig ausgeführt werden kann, wird auf die vorhin erwähnte Ausnehmung 39 zu mittels eines ringförmigen Federelementes 42 vorgespannt.

Der Betätigung des Freilaufs 35 dient eine elektromagnetische Betätigungseinrichtung, die im gezeigten Beispiel das Bezugszeichen 43 trägt. Die Betätigungseinrichtung 43 besteht im wesentlichen aus einem bistabilen Elektromagneten 44 sowie einem Stößel 45, der mit dem Anker des Elektromagneten 44 zusammenwirkt und beim Aktivieren des Elektromagneten 44 den Klemmkörper 38 radial verstellt. Der Stößel 45 wird in einer rohrförmigen Führung 47 geführt, die an einem den Lager-Außenring 36 aufnehmenden, im Motorgehäuse 8 angeordneten ringförmigen Aufnahmeteil 48 angeformt ist.

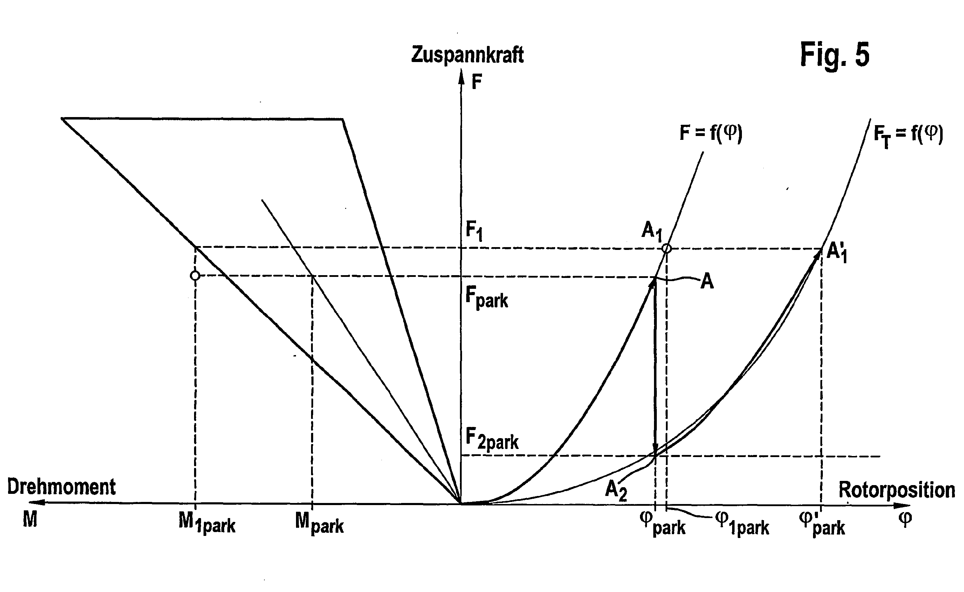

Beim Aktivieren der Feststellbremsvorrichtung 35 ist die folgende Funktionsabfolge vorgesehen, die im Zusammenhang mit Fig. 5 näher erläutert wird:

Zunächst wird die elektromechanische Bremse durch eine entsprechende Ansteuerung des Elektromotors 10 auf das notwendige Zuspannkraftniveau Fₚₐᵣₖ zugespannt. Es wird davon ausgegangen, dass sich die Bremse im "warmen" Zustand befindet, so dass die Aktivierung der Feststellbremsvorrichtung gemäß der Charakteristik F = f(ϕ) durchgeführt wird. Die einzustellende Zuspannkraft Fₚₐᵣₖ wird bei der Aktuatorposition bzw. der Position des Rotors erreicht, die mit ϕₚₐᵣₖ bezeichnet wird. In dem durch die erwähnten Koordinaten ϕₚₐᵣₖ, Fₚₐᵣₖ definierten Punkt A wird die Feststellbremsvorrichtung 35 verriegelt. Gleichzeitig wird durch Messen des dem Elektromotor 10 zugeführten Stroms der Mittelwert Mₚₐᵣₖ des vom Elektromotor 10 aufgebrachten Drehmoments ermittelt, der dem Wirkungsgrad = 1 der Anordnung entspricht. Der Mittelwert wird dabei vorzugsweise auf einen unteren Grenzwert überprüft. Liegt der Drehmoment-Mittelwert unter diesem Grenzwert, so wird das Drehmoment (und somit auch die Zuspannkraft) auf den Grenzwert erhöht. Liegt der Drehmoment-Mittelwert über dem Grenzwert, so bleibt es bei der eingeregelten Zuspannkraft. Der Drehmoment-Mittelwert, mit dem die Bremse zugespannt wurde, wird in einem nicht flüchtigen Speicher (EEPROM) gespeichert. Anschließend wird der Drehmoment-Mittelwert Mₚₐᵣₖ in einem nicht dargestellten elektronischen Steuergerät bzw. Regler mit einem Korrekturfaktor k_{η} > 1 multipliziert und somit ein höherer Drehmomentwert M₁ₚₐᵣₖ festgelegt. Unter der Annahme, dass in diesem Fall der aufsteigende Zweig der wirkungsgradabhängigen Hysteresekennlinie zu berücksichtigen ist bzw. herangezogen wird, ergibt sich aus dem höheren Drehmomentwert M₁ₚₐᵣₖ eine höhere Zuspannkraft F₁, der ein Verriegelungspunkt A₁ auf der Kennlinie F = f(ϕ) entspricht. Der zusätzlichen Ansteuerung des Aktuators im Sinne der erwähnten Zuspannkrafterhöhung entspricht eine geänderte Aktuatorposition ϕ₁ₚₐᵣₖ.

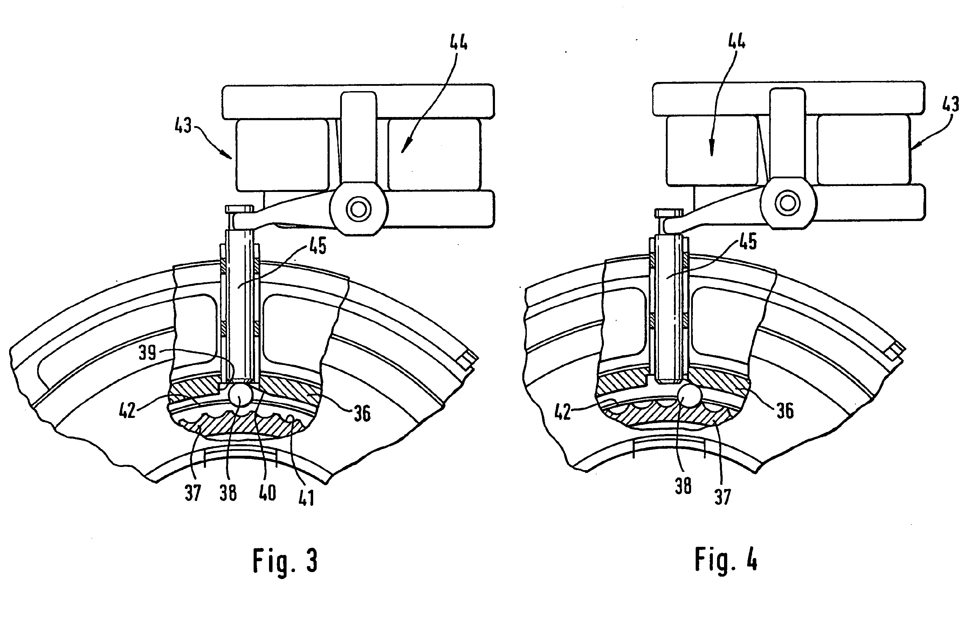

Es ist zu erwähnen, dass beim Zuspannen der Bremse der Rotor 11 bzw. der Lager-Innenring 37 entgegen der Klemmrichtung des Freilaufs 35, d.h., in der Zeichnung nach links, bewegt werden. Wenn bei der Betätigung der Feststellbremse der Klemmkörper 38 durch Aktivieren des Elektromagneten 44 in Richtung auf die Profilierung 41 zu verstellt wird, rollt er auf der vorhin erwähnten Rampe 40 in den sich verjüngenden Klemmspalt. Wird nun der dem Elektromotor 10 zugeführte Strom reduziert, so versucht die Federkraft der zugespannten Bremse den Rotor 11 bzw. den Lager-Innenring 37 in Klemmrichtung zu verdrehen. Dadurch wird die Feststellbremsvorrichtung sicher verriegelt. Die verriegelte Stellung der Feststellbremsvorrichtung ist in Fig. 4 dargestellt.

Zum Lösen der Feststellbremsvorrichtung nach kurzer Zeit (während der es noch nicht zu einem Nachspannen gekommen ist) muss der Elektromotor 10 die Bremse durch die Vorgabe eines deutlich über dem vorher benannten Drehmoment M₁ₚₐᵣₖ liegenden Drehmomentwert M_{lös} = k_{lös} * k_{η} * Mₚₐᵣₖ über eine definierte Zeit weiter zuspannen und der Elektromagnet 44 muss wiederum einmalig betätigt werden, um den Stößel 45 nach oben zu bewegen. Der dadurch entlastete Klemmkörper 38 wird durch die Kraft des ihn vorspannenden Federelementes 42 in die Ausnehmung 39 des Lager-Außenringes 36 gedrückt und der Rotor 11 ist in beiden Richtungen frei drehbar. Ein Lösen der Feststellbremsvorrichtung kann alternativ auch dadurch erreicht werden, dass der Elektromotor über eine vorher festgelegte Zeit derart angesteuert wird, dass er sein maximales Drehmoment Mₘₐₓ aufbringt.

Ähnlich wird auch in dem Fall verfahren, in dem bei der im Punkt A verriegelten Feststellbremsvorrichtung aufgrund einer Abkühlung der Bremse bei unveränderter Aktuatorposition ϕₚₐᵣₖ eine Reduzierung der eingestellten Zuspannkraft auf einen mit F₂ₚₐᵣₖ bezeichneten Wert stattfindet. Diesem Wert entspricht ein Betriebszustand, der durch einen Punkt A₂ auf einer Kennlinie F_{T} = f(ϕ) dargestellt ist, die für den abgekühlten Zustand der Bremse gültig ist und die durch eine temperaturabhängige Verschiebung der vorhin erwähnten Kennlinie entsteht. Die zur Erhöhung der erforderlichen Zuspannkraft auf den vorhin erwähnten Wert F₁ benötigte nochmalige Ansteuerung des Elektromotors 10 wird durch die Koordinate ϕ'ₚₐᵣₖ dargestellt.

Im Rahmen der vorliegenden Erfindung sind selbstverständlich auch zahlreiche Modifikationen des beanspruchten Verfahrens denkbar. So kann das Verfahren in vorab festgelegten Zeitspannen nach dem ersten Aktivieren der Feststellbremsvorrichtung, ggf. in Abhängigkeit von einer Aktuatortemperaturdifferenz, wiederholt werden. Die Aktuatortemperaturdifferenz entspricht dabei vorzugsweise der Differenz aus der Aktuatortemperatur beim ersten Aktivieren der Feststellbremsvorrichtung bzw. beim letzten Nachspannen der Bremse und der aktuellen Aktuatortemperatur, die z. B. mittels eines Aktuatortemperaturmodells geschätzt wird. Der vorhin erwähnte Korrekturfaktor k_{η} hängt vom Aktuatorwirkungsgrad bzw. von einer gemessenen oder geschätzten Hanglage des Fahrzeugs ab. Außerdem ist es denkbar, dass während des Lösevorgangs der Feststellbremsvorrichtung nach einem erfolgten weiteren erforderlichen Zuspannen der Bremse eine neue Aktuatorposition-Zuspannkraft-Kennlinie des Aktuators geschätzt wird.

## Patentansprüche

1. Verfahren zur Betätigung einer elektromechanischen Feststellbremsvorrichtung bei einer mittels eines elektromechanischen Aktuators betätigbaren Bremse, bei der der Aktuator aus einem Elektromotor sowie einem dem Elektromotor nachgeschalteten Untersetzungsgetriebe zur Umwandlung einer Drehbewegung in eine translatorische Bewegung besteht, und die elektromechanische Feststellbremsvorrichtung als ein Verriegelungsmechanismus ausgebildet ist, der die Drehbewegung des Aktuators in Löserichtung verhindern kann und der erst wieder durch weiteres Zuspannen gelöst werden kann, **dadurch gekennzeichnet, dass** während der Aktivierung der Feststellbremsvorrichtung ein Mittelwert des Drehmoments (Mₚₐᵣₖ) des Elektromotors, das zum Aufbringen der dem Feststellbremsvorgang entsprechenden Zuspannkraft der Bremse erforderlich ist, bei gleichzeitiger Erfassung der Aktuatorposition (ϕ) ermittelt und gespeichert wird und der Elektromotor zu späteren Zeitpunkten derart angesteuert wird, dass er dieses, mit einem Korrekturfaktor k_{η} => 1 multiplizierte Drehmoment (Mₚₐᵣₖ) aufbringt, so dass die aufgebrachte Spannkraft aufrecht erhalten bzw. erhöht wird.

2. Verfahren nach Anspruch 1 **dadurch gekennzeichnet, dass** die Ermittlung des Drehmoments (Mₚₐᵣₖ) durch Messen des dem Elektromotor (10) zugeführten Stroms erfolgt.

3. Verfahren nach Anspruch 1 **dadurch gekennzeichnet, dass** der ermittelte Drehmoment-Mittelwert (Mₚₐᵣₖ) auf einen unteren Grenzwert hin überwacht wird und beim Unterschreiten dieses Grenzwertes auf diesen unteren Grenzwert gesetzt wird.

4. Verfahren nach Anspruch 1 und 2 **dadurch gekennzeichnet, dass** der Elektromotor (10) in vorab festgelegten Zeitspannen nach dem ersten Aktivieren der Feststellbremsvorrichtung derart angesteuert wird, dass er das mit dem Korrekturfaktor k_{η} => 1 multiplizierte Drehmoment (Mₚₐᵣₖ) aufbringt.

5. Verfahren nach Anspruch 1 und 2 **dadurch gekennzeichnet, dass** der Elektromotor (10) in Abhängigkeit von einer Aktuatortemperaturdifferenz derart angesteuert wird, dass er das mit dem Korrekturfaktor k_{η} => 1 multiplizierte Drehmoment (Mₚₐᵣₖ) aufbringt.

6. Verfahren nach einem der Ansprüche 1 bis 4 **dadurch gekennzeichnet, dass** die Aktuatortemperaturdifferenz der Differenz aus der Aktuatortemperatur beim ersten Aktivieren der Feststellbremsvorrichtung bzw. beim letzten Ansteuern des Elektromotors (10) zum Aufbringen des mit dem Korrekturfaktor k_{η} => 1 multiplizierten Drehmoments (Mₚₐᵣₖ) und der aktuellen Aktuatortemperatur entspricht.

7. Verfahren nach einem der Ansprüche 5 oder 6 **dadurch gekennzeichnet, dass** die Aktuatortemperatur mit Hilfe eines Aktuatortemperaturmodells geschätzt wird.

8. Verfahren nach einem der Ansprüche 1 bis 7 **dadurch gekennzeichnet, dass** der Korrekturfaktor k_{η} vom Aktuatorwirkungsgrad abhängt.

9. Verfahren nach einem der Ansprüche 1 bis 8 **dadurch gekennzeichnet, dass** der Korrekturfaktor k_{η} von einer gemessenen oder geschätzten Hanglage des Fahrzeugs abhängt.

10. Verfahren nach einem der Ansprüche 1 bis 8 **dadurch gekennzeichnet, dass** zum Lösen der Feststellbremsvorrichtung der Elektromotor (10) über eine vordefinierte Zeit derart angesteuert wird, dass eine Drehmomentvorgabe M_{lös} = k_{lös} * k_{η} * Mₚₐᵣₖ erfüllt wird.

11. Verfahren nach einem der Ansprüche 1 bis 8 **dadurch gekennzeichnet, dass** zum Lösen der Feststellbremsvorrichtung der Elektromotor über eine vordefinierte Zeit derart angesteuert wird, dass er sein maximales Drehmoment M_{lös} = Mₘₐₓ aufbringt.

12. Verfahren nach einem der Ansprüche 1 bis 9 **dadurch gekennzeichnet, dass** während des Lösens der Feststellbremsvorrichtung eine neue Aktuatorposition-Zuspannkraft-Kennlinie des Aktuators geschätzt wird.

## Claims

1. Method for actuating an electromechanical parking brake device for a brake that can be actuated by means of an electromechanical actuator, in which the actuator is comprised of an electric motor and a reduction gear that is connected downstream of the electric motor and is provided for converting a rotational motion into a translational motion, and the electromechanical parking brake device is provided in the form of a locking mechanism which can prevent the rotational motion of the actuator in the direction of release and can only be released again by further tensioning,
**characterized in that** during the activation of the parking brake device, a mean value Mₚₐᵣₖ of the torque of the electric motor, which is required for exerting the application force of the brake corresponding to the parking brake operation, is determined and stored while the actuator position (ϕ) is simultaneously detected, and the electric motor is actuated at later points in time in such a fashion that it generates the torque (Mₚₐᵣₖ) that is multiplied by a correction factor kη=>1 in order to maintain or increase the exerted tension force.

2. Method according to claim 1, **characterized in that** the detection of the torque (Mₚₐᵣₖ) is achieved by measuring the current supplied to the electric motor (10).

3. Method according to claim 1, **characterized in that** the determined mean torque value (Mₚₐᵣₖ) is monitored with regard to a lower limit value and is set to this lower limit value when it falls below this limit value.

4. Method according to claims 1 and 2, **characterized in that** after the first activation of the parking brake device, the electric motor (10) is actuated in previously defined periods of time in such a way that it generates the torque (Mₚₐᵣₖ) multiplied by the correction factor kη =>1.

5. Method according to claims 1 and 2, **characterized in that** the electric motor (10) is actuated depending on an actuator temperature difference in such a way that it generates the torque (Mₚₐᵣₖ) multiplied with the correction factor kη =>1.

6. Method according to any one of the claims 1 to 4, **characterized in that** the actuator temperature difference corresponds to the difference between the actuator temperature during the first activation of the parking brake device or the last operation the electric motor (10), respectively, for generating the torque (Mₚₐᵣₖ) multiplied by the correction factor kη =>1 and the actual actuator temperature.

7. Method according to any one of the claims 5 or 6, **characterized in that** the actuator temperature is estimated by means of an actuator temperature model.

8. Method according to any one of the claims 1 to 7, **characterized in that** the correction factor kη depends on the actuator efficiency.

9. Method according to any one of the claims 1 to 8, **characterized in that** the correction factor kη depends on a measured or estimated inclined position of the vehicle.

10. Method according to any one of the claims 1 to 8, **characterized in that** for releasing the parking brake device, the electric motor (10) is actuated for a predefined period of time in such a way that a torque specification Mᵣₑₗ = kᵣₑₗ * k_{η} * Mₚₐᵣₖ is satisfied.

11. Method according to any one of the claims 1 to 8, **characterized in that** for releasing the parking brake device, the electric motor is operated for a predefined period of time in such a way that its maximum torque Mᵣₑₗ = Mₘₐₓ is generated.

12. Method according to any one of the claims 1 to 9, **characterized in that** during releasing the parking brake device, a new characteristic curve of the actuator for actuator position - application force is estimated.

## Revendications

1. Procédé d'actionnement d'un dispositif électromécanique de frein de stationnement dans le cas d'un frein pouvant être actionné au moyen d'un actionneur électromécanique, dans lequel l'actionneur est constitué d'un moteur électrique ainsi que d'un démultiplicateur couplé en aval du moteur électrique pour la conversion d'un mouvement de rotation en un mouvement de translation, et le dispositif électromécanique de frein de stationnement est réalisé sous la forme d'un mécanisme de verrouillage qui peut empêcher le mouvement de rotation de l'actionneur dans le sens du desserrage et qui ne peut être resserré que par une tension complémentaire, **caractérisé en ce que** pendant l'activation du dispositif de frein de stationnement on détermine et mémorise une valeur moyenne du couple de rotation (Mₛₜₐₜᵢₒₙₙₑₘₑₙₜ) du moteur électrique qui est nécessaire pour appliquer la force de serrage du frein correspondant au processus de freinage de stationnement, en même temps qu'est relevée la position de l'actionneur (ϕ), et le moteur électrique est commandé à des instants ultérieurs de manière à appliquer ce couple de rotation (Mₛₜₐₜᵢₒₙₙₑₘₑₙₜ) multiplié par un facteur de correction k_{η} ≥ 1, ce qui fait que la force de serrage appliquée est maintenue ou accrue.

2. Procédé selon la revendication 1, **caractérisé en ce que** la détermination du couple de rotation (Mₛₜₐₜᵢₒₙₙₑₘₑₙₜ) s'effectue par mesure du courant amené au moteur électrique (10).

3. Procédé selon la revendication 1, **caractérisé en ce que** la valeur moyenne déterminée du couple de rotation (Mₛₜₐₜᵢₒₙₙₑₘₑₙₜ) est surveillée à une valeur limite inférieure et, en cas de dépassement de cette valeur limite elle est placée sur cette valeur limite inférieure.

4. Procédé selon les revendications 1 et 2, **caractérisé en ce que** le moteur électrique (10) est commandé, à intervalles de temps définis après la première activation du dispositif de frein de stationnement, de manière qu'il applique le couple de rotation (Mₛₜₐₜᵢₒₙₙₑₘₑₙₜ) multiplié par le facteur de correction k_{η} ≥ 1.

5. Procédé selon les revendications 1 et 2, **caractérisé en ce que** le moteur électrique (10) est commandé en fonction d'une différence de température de l'actionneur de manière qu'il applique le couple de rotation (Mₛₜₐₜᵢₒₙₙₑₘₑₙₜ) multiplié par le facteur de correction k_{η} ≥ 1.

6. Procédé selon l'une des revendications 1 à 4, **caractérisé en ce que** la différence de température de l'actionneur correspond à la différence entre la température de l'actionneur à la première activation du dispositif de frein de stationnement ou lors de la dernière commande du moteur électrique (10) pour l'application du couple de rotation (Mₛₜₐₜᵢₒₙₙₑₘₑₙₜ)multiplié par le facteur de correction k_{η} ≥ 1, et la température actuelle de l'actionneur.

7. Procédé selon l'une des revendications 5 ou 6, **caractérisé en ce que** la température de l'actionneur est estimée à l'aide d'un modèle de température de l'actionneur.

8. Procédé selon l'une des revendications 1 à 7, **caractérisé en ce que** le facteur de correction k_{η} dépend du rendement de l'actionneur.

9. Procédé selon l'une des revendications 1 à 8, **caractérisé en ce que** le facteur de correction k_{η} dépend d'une position en pente mesurée ou estimée du véhicule.

10. Procédé selon l'une des revendications 1 à 8, **caractérisé en ce que** pour desserrer le dispositif de frein de stationnement, le moteur électrique (10) est commandé pendant un temps prédéfini de manière à satisfaire un couple de rotation prescrit M_{desserrage} = k_{desserrage} * k_{η} * Mₛₜₐₜᵢₒₙₙₑₘₑₙₜ.

11. Procédé selon l'une des revendications 1 à 8, **caractérisé en ce que** pour desserrer le dispositif de frein de stationnement, le moteur électrique est commandé pendant un temps prédéfini de manière qu'il applique un couple de rotation maximal M_{desserrage} = Mₘₐₓ.

12. Procédé selon l'une des revendications 1 à 9, **caractérisé en ce que** pendant le desserrage du dispositif de frein de stationnement, une nouvelle courbe caractéristique position de l'actionneur-force de serrage de l'actionneur est estimée.
